# EUROPÄISCHE PATENTSCHRIFT

(11) **EP 2 189 303 B1**
(45) Veröffentlichungstag und Bekanntmachung des Hinweises auf die Patenterteilung: **28.08.2013**
(21) Anmeldenummer: 09175899.5
(22) Anmeldetag: 13.11.2009
(51) Int. Cl.: B60B 21/12, B60B 21/02, B60B 21/06

(54) **Felge für ein Speichenrad**
Rim for a spoked wheel
Jante pour une roue à rayons

(30) Priorität: 24.11.2008 DE 102008058812
(43) Veröffentlichungstag der Anmeldung: 26.05.2010
(73) Patentinhaber: Behr Industry Motorcycle Components GmbH, 08499 Mylau (DE)
(72) Erfinder: Müller, Marko, 08112, Wilkauf Haßlau (DE); Waldhelm, Torsten, 09577, Lichtenwalde (DE); Dominko, Andreas, 08115, Lichtentanne (DE)
(74) Vertreter: Bernhard, Uwe

(56) Entgegenhaltungen:
- EP-A1- 0 615 865
- EP-A2- 0 616 911
- EP-A2- 1 892 123
- CH-A- 339 518
- DE-A1- 3 727 051
- DE-A1-102006 029 468

## Beschreibung

Die Erfindung betrifft ein Felge gemäß dem Oberbegriff des Anspruches 1, ein Speichenrad gemäß dem Oberbegriff des Anspruches 10 und ein Kraftfahrzeug oder ein Zweirad sowie ein Verfahren zur Herstellung einer Felge oder eines Speichenrades gemäß dem Oberbegriff des Anspruches 12.

Bei Kraftfahrzeugen oder Zweirädern, insbesondere Krafträdern, werden häufig Speichenräder eingesetzt. Speichenräder sind vor allem im Offroad-Betrieb bzw. bei einem gemischten Einsatz zwischen On- und Offroad-Einsatz interessant. Weiterhin werden Speichenräder auch aufgrund ihres optischen Eindruckes bei Kraftfahrzeugen und Zweirädern eingesetzt.

Ein Speichenrad umfasst im Allgemeinen eine Felge und eine Nabe, die mittels Speichen miteinander verbunden sind. An der Felge ist ein Reifen befestigt. Die Felgen sind im Allgemeinen sogenannte gepunzte Felgen, bei denen die Felge eine Vertriefung aufweist zur Aufnahme und Ausrichtung von Speichennippel. Die Punze weist eine Öffnung zur Aufnahme der Speichennippel auf. Die Öffnung führt dazu, dass der von dem Reifen und der Felge eingeschlossene Ringraum nicht luftdicht gegenüber der Umgebung ist. Aus diesem Grund ist es im Allgemeinen bei einem Speichenrad erforderlich, einen Luftschlauch zu verwenden.

Speichenräder mit einem Luftschlauch weisen Nachteile auf. Der zur Abdichtung benötigte Luftschlauch ist anfällig für Beschädigungen, welche durch Durchschläge beim Überfahren von Kanten oder anderen Hindernissen entstehen können. Dieses Problem wird noch verschärft, wenn sogenannte Reifenspanner zum Einsatz kommen. Diese dienen zum Festsitz des Reifens, insbesondere bei hohen Antriebsleistungen und beim Einsatz des Speichenrades im Offroad-Bereich. Da der Luftdruck bei Beschädigungen sehr schnell abfallen kann, kommt es im Fahrbetrieb zu einem schnellen Verlust der Nachführungskräfte und somit zu einem erhöhten Gefahrenpotential. Weiterhin stellen die Bauteile der herkömmlichen Luftabdichtung, z. B. der Reifen, der Luftschlauch, die Felge und das Felgenband, ein erhöhtes Gewicht dar. Diese hohen Massen am Außenrand des Speichenrades stellen ein hohes Rotationsträgheitsmoment dar und schränken die Manövrierbarkeit z. B. eines Motorrades bei Fahrrichtungswechsel ein. Ein weiterer Nachteil eines Speichenrades mit Luftschlauch sind die Materialeigenschaften des Luftschlauches. Dieses Material ist hochflexibel und in den meisten Fällen nicht alterungsbeständig und muss daher häufig ausgetauscht werden. Verstärkt wird dieser Effekt, da Luftschläuche sehr dünnwandig ausgeführt sind.

Gussräder oder Schmiederäder, bei denen der Felgenbereich bis auf die Ventilbohrung geschlossen ist, weisen aufgrund ihrer Herstellung jedoch Nachteile in ihrer Flexibilität auf und sind bruchanfällig oder in der Herstellung teuer. Daneben gibt es Speichenräder, welche ohne den Einsatz eines Luftschlauches auskommen, bei denen die Speichen außerhalb des Reifenbereiches, d. h. außerhalb des Felgenbettes, befestigt werden. Die Befestigung der Speichen erfolgt im Felgenhorn. Aufgrund der stark geneigten Speichen sind diese Speichenräder jedoch schlecht zu zentrieren und wegen der verstärkten Ausführung des Felgenhornes deutlich schwerer als herkömmliche Felgenquerschnitte mit den oben beschriebenen Nachteilen hinsichtlich des Rotationsträgheitsmomentes.

Zur Vermeidung dieser Probleme ist es bereits bekannt, Speichenräder mit Schlauchlosreifen zu verwenden.

Die EP 0 615 865 B1 zeigt eine Dichtungsvorrichtung für Reifen ohne Luftschlauch, die auf Speichenräder montiert werden. Mittels eines Gummistreifens werden die von den Punzen gebildeten Öffnungen luftdicht abgeschlossen, so dass ein Schlauchlosreifen verwendet werden kann. Nachteiligerweise ist die Geometrie der Felge komplex, so dass dadurch eine hohe Masse an der Felge auftritt. Darüber hinaus ist ein spezieller Reifen mit einer übergroßen Reifenwulst erforderlich.

Die DE 10 2004 055 892 A1 zeigt eine Felge eines Speichenrades für Schlauchlosreifen mit einer Dichtungsvorrichtung, die im Bereich eines Felgenbettes in einer Vertiefung der Felge angeordnet ist und die Dichtflächen im Bereich beiderseits einer Felgenmittelebene aufweist, wobei die Felge im Bereich der Dichtfläche eine Hinterschneidung besitzt und die Dichtungsvorrichtung zur Hinterschneidung weitgehend form- und/oder flächenkomplementär ausgebildet ist und in dieser angeordnet ist. Um eine ausreichende Dichtigkeit sowie einen passgenauen Sitz der Dichtungsvorrichtung in der Hinterschneidung zu erreichen, muss die Hinterschneidung mit einer sehr hohen Genauigkeit hergestellt werden. Dies ist mit den heute bekannten Herstellungsverfahren nur durch zusätzliche mechanische Bearbeitung realisierbar. Weiterhin ist das Verfahren durch seine Vertiefung im Felgenbett nicht optimal für eine Gewichtsreduktion geeignet und gegenüber den bekannten Systemen mit Schlauch ergeben sich keine bzw. nur geringfügig neutrale Gewichtsverhältnisse. Ein weiterer Nachteil ist, dass das Felgendesign durch die Geometrie der Dichtnut bestimmt wird und somit das Felgendesign der Funktion folgt.

Aus der US 2004/0004391 A1 ist eine gattungsbildende Felge mit einer Dichtungsvorrichtung für ein Speichenrad mit Schlauchlosreifen bekannt. Die Felge weist beiderseits einer Felgemittelebene Rippen auf, in welche zwei an der Dichtungsvorrichtung ausgebildete Dichtungsnuten eingeführt sind. Die beiden Rippen bilden damit eine Auflagefläche für die Dichtungsvorrichtung. Nachteiligerweise ist die Dichtungsvorrichtung nur mittels der beiden in den Dichtungsnuten angeordneten Rippen mit der Felge verbunden, so dass ein sicherer Halt der Dichtungsvorrichtung in der Felge, insbesondere bei einer hohen Rotationsdrehgeschwindigkeit des Speichenrades, nicht gewährleistet ist.

Eine gattungsbildende Felge ist beispielsweise aus der DE 10 2006 029 468 A1 bekannt und umfasst eine Dichtungsvorrichtung für ein Speichenrad mit Schlauchlosreifen, wobei die Felge wenigstens eine Rippe aufweist, welche in wenigstens eine Dichtungsnut in der Dichtungsvorrichtung eingreift, so dass sich an der wenigstens einen Rippe eine erste Auflagefläche für die Dichtungsvorrichtung ausbildet, wobei die Dichtungsvorrichtung zusätzlich an wenigstens einer zweiten Auflagefläche der Felge aufliegt.

Weitere Felgen sind aus der CH 339 518 A, der DE 37 27 051 A1 und der EP 0 616 911 A2 bekannt.

Die Aufgabe der vorliegenden Erfindung besteht deshalb darin, einen Felge mit einer Dichtungsvorrichtung für ein Speichenrad mit Schlauchlosreifen und ein Speichenrad sowie ein Verfahren zur Herstellung einer Felge oder eines Speichenrades zur Verfügung zu stellen, bei dem die Dichtungsvorrichtung auch bei großen Fliehkräften sicher in der Felge befestigt ist. Ferner sollen die Felge und das Speichrad in der Herstellung preiswert sein, sowie gegenüber Schlauchrädem möglichst gewichtsneutral/leichter sein. Weiterhin sollen die bisher verwendeten Standardfelgenquerschnitte weiter verwendet werden können und somit die Designfreiheit gewahrt bleiben.

Diese Aufgabe wird gelöst mit Felge mit einer Dichtungsvorrichtung für ein Speichenrad mit Schlauchlosreifen, wobei die Felge wenigstens eine Rippe aufweist, welche in wenigstens eine Dichtungsnut in der Dichtungsvorrichtung eingreift, so dass sich an der wenigstens einen Rippe eine erste Auflagefläche für die Dichtungsvorrichtung ausbildet, wobei die Dichtungsvorrichtung zusätzlich an wenigstens einer zweiten Auflagefläche der Felge aufliegt. Aufgrund der zusätzlichen Verbindung der Dichtungsvorrichtung mit der zweiten Auflagefläche ist die Dichtungsvorrichtung besonders sicher und zuverlässig insbesondere auch bei hohen Rotationsgeschwindigkeiten mit der Felge verbunden. Die zweite Auflagefläche ist außerhalb der ersten Auflagefläche. Erfindungsgemäß ist die wenigstens eine Rippe durch Umformung in die Position gebracht, in der sie in die wenigstens eine Dichtungsnut eingreift.

Insbesondere ist die wenigstens eine zweite Auflagefläche und/oder die wenigstens eine Rippe und/oder die wenigstens eine Dichtungsnut beiderseits einer Mittelachse oder einer Felgenmittelebene ausgebildet. Bei einer Ausbildung der wenigstens einen zweiten Auflagefläche und/oder der wenigstens einen Rippe und/oder der wenigstens einen Dichtungsnut beiderseits der Mittelachse oder der Felgenmittelebene ist die Verbindung zwischen der Dichtungsvorrichtung und der Felge besonders sicher und zuverlässig ausgebildet. Es können insbesondere auch an jeweils einer Seite der Mittelachse oder der Felgenmittelebene mehrere zweite Auflageflächen und/oder mehr als zwei Rippen und/oder mehr als zwei Dichtungsnuten vorhanden sein.

In einer weiteren Ausgestaltung ist wenigstens 10 % der Oberfläche der wenigstens einen zweiten Auflagefläche zu einer Achse eines von der Felge gebildeten Speichenrades abgewandt und/oder die Oberfläche der wenigstens einen zweiten Auflagefläche ist wenigstens teilweise konkav.

In einer ergänzenden Ausführungsform weist die Felge im Bereich der zweiten Auflagefläche wenigstens eine Hinterschneidung auf und die Dichtungsvorrichtung ist in der wenigstens einen Hinterschneidung angeordnet. Mittels der Hinterschneidung kann die Verbindung zwischen der Felge und der Dichtungsvorrichtung zusätzlich verbessert werden, insbesondere weist die Hinterschneidung eine Oberfläche auf, die zu einer Achse eines von der Felge gebildeten Speichenrades zugewandt ist, so dass bei einer Rotationsbewegung des Speichenrades die Dichtungsvorrichtung auf diese Auflagefläche gedrückt wird und dadurch die Verbindung zusätzlich verbessert wird.

Vorzugsweise ist die Dichtungsvorrichtung im Wesentlichen form- und/oder flächenkomplementär zu der wenigstens einen Hinterschneidung ausgebildet.

In einer Variante ist die wenigstens eine Rippe in einem Winkel (α) zwischen 0° und 180°, insbesondere zwischen 0° und 45°, zu der Mittelachse oder der Felgenmittelebene ausgerichtet. Vorzugsweise ist das Ende der wenigstens einen Rippe in Richtung zu der Mittelachse oder der Felgenmittelebene ausgerichtet. Die Mittelachse steht senkrecht auf dem Mittelpunkt der Achse des Speichenrades.

Zweckmäßig umschließt die Dichtungsvorrichtung, insbesondere die wenigstens eine Dichtungsnut, die wenigsten eine Rippe wenigstens teilweise, insbesondere vollständig. Bei einem vollständigen Umschließen der Rippe durch die Dichtungsnut tritt eine besonders gute formschlüssige Verbindung zwischen der Dichtungsnut und der Rippe auf.

In einer weiteren Ausführungsform weist die wenigstens eine Hinterschneidung zu einer Achse eines von der Felge gebildeten Speichenrades einen geringeren Abstand auf als die Rippe. Die Hinterscheidung wird dadurch besonders gut teilweise auch von der Rippe gebildet, so dass die Felge kompakt mit einer geringen Masse aufgebaut ist.

Insbesondere besteht die wenigstens eine Dichtungsvorrichtung wenigstens teilweise aus einem elastischen Material, z. B. Kunststoff oder Gummi, und/oder die erste und/oder zweite Auflagefläche ist im Bereich eines Felgenbettes der Felge angeordnet.

In einer weiteren Ausgestaltung ist die Dichtungsnut der Dichtungsvorrichtung im nicht-eingebauten Zustand in der Felge kleiner als die Rippe, so dass sich im eingebauten Zustand der Dichtungsnut in der Rippe aufgrund elastischer Eigenschaften der Dichtungsvorrichtung eine Flächenpressung zwischen der Dichtungsnut und der Rippe ergibt. Dadurch entsteht zusätzlich eine kraftschlüssige Verbindung zwischen der wenigstens einen Dichtungsnut und der wenigstens einen Rippe.

Zweckmäßig ist der wenigstens ein Dichtungssteg in der wenigstens einen Hinterschneidung der Felge angeordnet. Vorzugsweise ist der wenigstens eine Dichtungssteg in einem nicht-eingebauten Zustand der Dichtungsvorrichtung mit der Felge größer als die wenigstens eine Hinterschneidung. Dadurch ergibt sich in einem eingebauten Zustand der Dichtungsvorrichtung mit der Felge eine Flächenpressung aufgrund der elastischen Eigenschaften der Dichtungsvorrichtung zwischen dem Dichtungssteg und der Hinterschneidung. Es ergibt sich damit auch eine kraftschlüssige Verbindung zwischen der wenigstens einen Hinterschneidung und dem wenigstens einen Dichtungssteg.

Ein erfindungsgemäßes Speichenrad umfasst eine in dieser Anmeldung beschriebene Felge, eine Nabe, Speichen, einen Schlauchlosreifen und eine Dichtungsvorrichtung zum Abdichten von Punzen in der Felge.

Ein erfindungsgemäßes Kraftfahrzeug oder ein erfindungsgemäßes Zweirad, insbesondere ein Kraftrad, umfasst wenigstens eine in dieser Anmeldung beschriebene Felge und/oder wenigstens ein in dieser Anmeldung beschriebenes Speichenrad.

Erfindungsgemäßes Verfahren zur Herstellung einer Felge oder eines Speichenrades, insbesondere einer in dieser Anmeldung beschriebenen Felge oder eines in dieser Anmeldung beschriebenen Speichenrades, mit den Schritten: Herstellen oder zur Verfügung stellen einer Felge oder eines Felgenringes mit wenigstens einer Rippe, Herstellen oder zur Verfügung einer Dichtungsvorrichtung mit wenigstens einer Dichtungsnut, Einbringen der wenigstens einen Dichtungsnut in die wenigstens eine Rippe zum Verbinden der Dichtungsvorrichtung mit der Felge oder dem Felgenring, so dass sich eine erste Auflagefläche zwischen der wenigstens einen Rippe und der Dichtungsnut ausbildet, wobei die wenigstens eine Rippe während des Einbringens in die wenigstens eine Dichtungsnut verformt wird, derart, dass mittels der Verformung der wenigstens einen Rippe die wenigstens ein Rippe in die wenigstens eine Dichtungsnut eingebracht wird. Optional kann vor dem Einbringen der wenigstens einen Dichtungsnut in die wenigstens eine Rippe die wenigstens eine Rippe spanabhebend bearbeitet werden.

Die wenigstens eine Rippe wird während des Einbringens in die wenigstens eine Dichtungsnut verformt, wobei das Verformen der wenigstens einen Rip pe dazu dient, die wenigstens eine Rippe in die wenigstens eine Dichtungsnut einzuführen oder umgekehrt. Die wenigstens eine Rippe kann dadurch mit großen Kräften in die wenigstens eine Dichtungsnut eingeführt werden, so dass auch bei größeren Fertigungstoleranzen zwischen der Größe der wenigstens einen Rippe und der Größe der wenigstens einen Dichtungsnut das Einbringen der wenigstens einen Rippe in die wenigstens eine Dichtungsnut zuverlässig bei der Herstellung möglich ist. Die wenigstens eine Felge ist damit in der Herstellung preiswert, weil die wenigstens eine Rippe nicht mit einer hohen Fertigungsgenauigkeit, z. B. spanabhebend durch Drehen, hergestellt werden muss.

Bei einem spanabhebenden Bearbeiten der wenigstens einen Rippe kann die wenigstens eine Rippe mit einer sehr hohen Fertigungsgenauigkeit bzw. der notwendigen Größe hinsichtlich der wenigstens einen Dichtungsnut hergestellt werden. Beim Verbinden bzw. Einführen der wenigstens einen Rippe in die wenigsten eine Dichtungsnut sind dadurch geringe Kräfte erforderlich.

Insbesondere wird die wenigstens eine Rippe mittels Drehen und/oder Fräsen spanabhebend bearbeitet.

In einer weiteren Ausgestaltung wird wenigstens eine Rippe mittels bördeln und/oder umdrücken und/oder einem Rollvorgang verformt wird und/oder bei der Verformung der wenigstens einen Rippe die Ausrichtung der wenigstens einen Rippe in einem Winkel (α) zu einer Mittelachse geändert wird, z. B. der Winkel (α) zwischen 0° und 120 geändert.

In einer ergänzenden Variante wird die Dichtungsvorrichtung auf wenigstens eine zweite Auflagefläche der Felge aufgelegt. Mittels der wenigstens einen zweiten Auflagefläche ist die Dichtungsvorrichtung zusätzlich mit der Felge verbunden, so dass die Dichtungsvorrichtung sicher und zuverlässig mit der Felge verbunden ist.

Im Nachfolgenden werden Ausführungsbeispiele der Erfindung unter Bezugnahme auf die beigefügten Zeichnungen näher beschrieben. Es zeigt:
- Fig. 1: einen Querschnitt einer Felge mit einer Dichtungsvorrichtung in einer ersten Ausführungsform mit einem Schlauchlosreifen,
- Fig. 2: eine vergrößerte Teilansicht des Querschnitts gemäß Fig. 1,
- Fig. 3: einen Querschnitt der Felge mit der Dichtungsvorrichtung in einer zweiten Ausführungsform ohne Schlauchlosreifen,
- Fig. 4: einen Querschnitt der Felge mit der Dichtungsvorrichtung in einer dritten Ausführungsform ohne Schlauchlosreifen,
- Fig. 5: einen Querschnitt der Felge mit der Dichtungsvorrichtung in einer vierten Ausführungsform ohne Schlauchlosreifen,
- Fig. 6: einen Querschnitt der Dichtungsvorrichtung in einer ersten Ausführungsform,
- Fig. 7: einen Querschnitt der Dichtungsvorrichtung in einer zweiten Ausführungsform,
- Fig. 8: einen Querschnitt der Dichtungsvorrichtung in einer dritten Ausführungsform,
- Fig. 9: einen Querschnitt der Dichtungsvorrichtung in einer vierten Ausführungsform,
- Fig. 10: einen Querschnitt der Folge ohne der Dichtungsvorrichtung vor und nach einer spanabhebenden Bearbeitung einer Rippe und
- Fig. 11: einen Querschnitt der Folge ohne der Dichtungsvorrichtung vor und nach einer Verformung der Rippe.

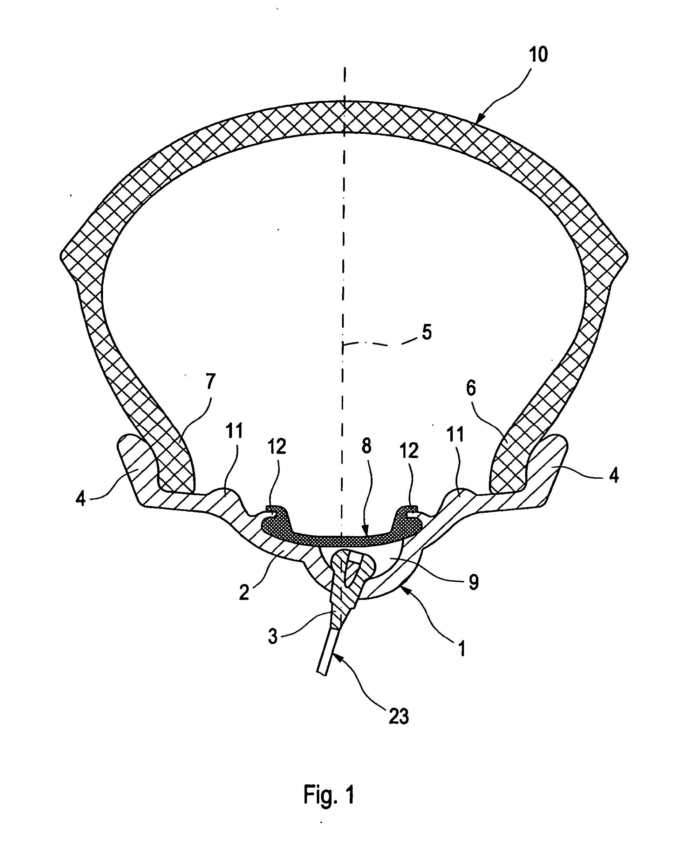

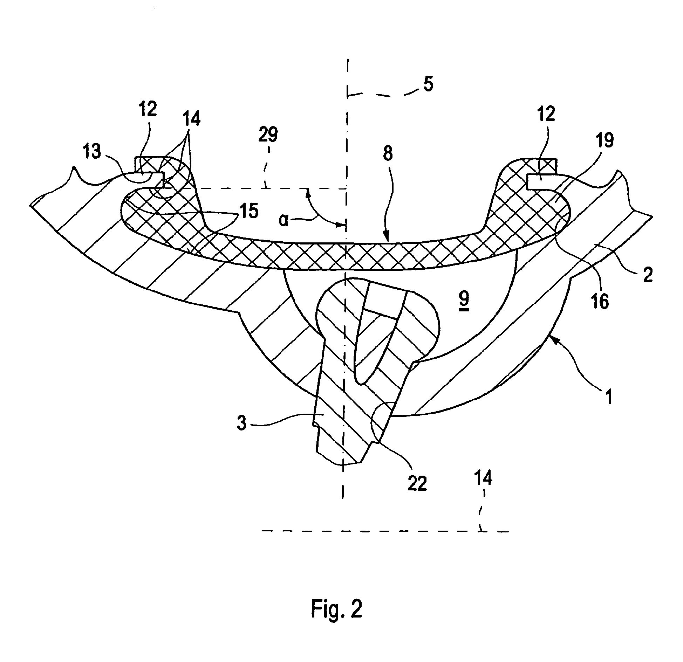

In Fig. 1 ist ein Querschnitt einer Felge 1 aus Metall, z. B. Stahl oder Aluminium, mit einer Dichtungsvorrichtung 8 für ein Speichenrad mit einem Schlauchlosreifen 10 dargestellt. Das Speichenrad kann beispielsweise in Krafträdern eingesetzt werden (nicht dargestellt). Der Schlauchlosreifen 10 mit einer ersten Reifenwulst 6 und einer zweiten Reifenwulst 7 liegt an einem Felgenhorn 4 der Felge 1 auf. Die Reifenwulst 6, 7 kann durch einen Hump 11 von einem Felgenbett 2 der Felge 1 getrennt sein. Die Reifenwulst 6, 7 kann damit nicht zu dem Felgenbett 2 aufgrund der Hump 11 verrutschen. Beiderseits einer Mittelachse 5 eines von der Felge 1 gebildeten Speichenrades ist an der Felge 1 jeweils eine Rippe 12 ausgebildet. Ferner weist die Felge 1 beiderseits der Mittelachse 5 jeweils eine Hinterschneidung 16 auf (Fig. 2). Die elastische aus Gummi bestehende Dichtungsvorrichtung 8 weist bei der Anordnung gemäß Fig. 1 und 2 beiderseits der Mittelachse 5 jeweils eine Dichtungsnut 13 und jeweils einen Dichtungssteg 19 auf. Die Rippe 12 ist dabei in der Dichtungsnut 13 und der Dichtungssteg 19 in der Hinterschneidung 16 angeordnet (Fig. 1 und 2). Die Rippe 12 bildet damit eine erste Auflagefläche 14 für die Dichtungsvorrichtung 8 und die Hinterschneidung 16 sowie ein weiterer Teil des Felgenbettes 2 bilden eine zweite Auflagefläche 15 für die Dichtungsvorrichtung 8.

In dem Felgenbett 2 sind Punzen 22 eingearbeitet. In den Punzen 22 ist mittels eines Speichennippels 3 jeweils eine Speiche 23 mit der Felge 1 verbunden (Fig. 2). Die Punzen 22 stellen damit eine Öffnung in der Felge 1 dar. Die Dichtungsvorrichtung 8 dichtet diese durch die Punzen 22 gebildeten Öffnungen luftdicht ab, so dass der von dem Schlauchlosreifen 10 und der Felge 1 eingeschlossene Ringraum luftdicht abgeschlossen ist. Die erste und zweite Auflagefläche 14, 15 stellen damit auch Dichtungsflächen dar. Die Hinterschneidungen 16 dienen außerdem zur formgenauen Positionierung der Dichtungsvorrichtung 8 in der Felge 1. Mittels der Dichtungsnut 13 und der Rippe 12 erfolgt eine zusätzliche Abdichtung, insbesondere wenn ein niedriger Luftdruck vorliegt und das Speicherrad mit einer großen Rotationsgeschwindigkeit betrieben wird. Mittels der Hinterschneidung 16 und der Dichtungsnut 13 ist außerdem eine gute formschlüssige Verbindung zwischen der Dichtungsvorrichtung 8 und der Felge 1 vorhanden. Ferner ist auch eine kraftschlüssige Verbindung zwischen der Dichtungsnut 13 und der Rippe 12 sowie der Hinterschneidung 16 und dem Dichtungssteg 19 vorhanden. Der Dichtungssteg 19 ist im nicht-eingebauten Zustand der Dichtungsvorrichtung 8 geringfügig größer als die Hinterschneidung 16 und die Dichtungsnut 13 ist im nicht-eingebauten Zustand der Dichtungsvorrichtung 8 kleiner als die Rippe 12, so dass sich eine Flächenpressung an der ersten und zweiten Auflagefläche 14, 15 bei einer Verbindung zwischen der Dichtungsvorrichtung 8 und der Felge 1 einstellt.

Aufgrund der Ausbildung der Dichtungsvorrichtung 8 im Bereich des Felgenbettes 2 besteht nicht die Möglichkeit, dass bei der Montage des Schlauchlosreifens 10 eine Beschädigung der Dichtungsvorrichtung 8 auftritt. Weiterhin kann es durch diese Anordnung nicht zum Verrutschen der Dichtungsvorrichtung 8 durch Montage oder Relativbewegungen des Schlauchlosreifens 10 kommen, weil die erste und zweite Reifenwulst 6, 7 durch jeweils einen Hump 11 beiderseits der Mittelachse 5 von dem Felgenbett 2 getrennt ist.

Die Gestaltung und die Größe der umlaufenden Rippe 12 und der Dichtungsnut 13 ist abhängig von der erwünschten Flächenpressung an der ersten und zweiten Auflagefläche 14, 15 und den vorgegebenen Einsatzzwecken. Bei einer Verwendung des Speichenrades im Offroad-Bereich wird häufig mit einem niedrigen Luftdruck gefahren, um die Reifenaufstandsfläche zu erhöhen (nicht dargestellt). Bei diesem Einsatzzweck ist der benötigte Innenluftdruck im Fahrbetrieb niedrig. Daraus resultiert eine niedrige Flächenpressung im Bereich der zweiten Auflagefläche 15 und damit auch im Bereich der Hinterschneidung 16. Zur Kompensation wird hierzu die Rippe 12 und die Dichtungsnut 13 besonders groß, insbesondere mit einer großen Länge ausgebildet. Dadurch kann auch bei diesem Einsatzzweck eine sichere und zuverlässige Verbindung zwischen der Dichtungsvorrichtung 8 und der Felge 1 gewährleistet werden. Die Rippe 12 und die Dichtungsnut 13 verhindern damit bei entsprechenden radialen Kräften, dass sich die Dichtungsvorrichtung 8 von der Felge 1 lösen kann. Die Geometrie der Hinterschneidung 16 und der Rippe 12 wird unter anderem auch von einem Winkel α bestimmt, zu der die Rippe 12 zu der Mittelachse 5 ausgerichtet ist. Vorzugsweise beträgt der Winkel α zwischen 0 und 45°. In Fig. 2 beträgt der Winkel α ungefähr 90°, d. h. die Rippe 12 steht senkrecht auf der Mittelachse 5. Der Winkel α wird zwischen einer Geraden 29 und der Mittelachse 5 bestimmt bzw. ist entsprechend definiert. Die Gerade 29 entspricht dabei oder ist parallel zu einer Längsachse der Rippe 12 im Bereich eines Endes der Rippe 12. Bei einem Winkel α von 0° ist das Ende der Rippe 12 bzw. die entsprechende Längsachse der Rippe 12 vertikal nach oben ausgerichtet, d. h. parallel zu der Mittelachse 5.

Der Abstand der Hinterschneidung 16 zu einer Achse 24 des von der Felge 1 gebildeten Speichenrades ist kleiner als der Abstand der Rippe 12 zu der Achse 24 (Fig. 2). Die Rippe 12 weist zu einer ringförmigen Kammer 9 damit einen größeren Abstand auf als die Hinterschneidung 16. Die ringförmige Kammer 9 ist luftleitend mittels der von den Punzen 22 gebildeten Öffnungen mit der Umgebung des Speichenrades verbunden. Die Speichennippel 3 sind teilweise in der Kammer 9 angeordnet.

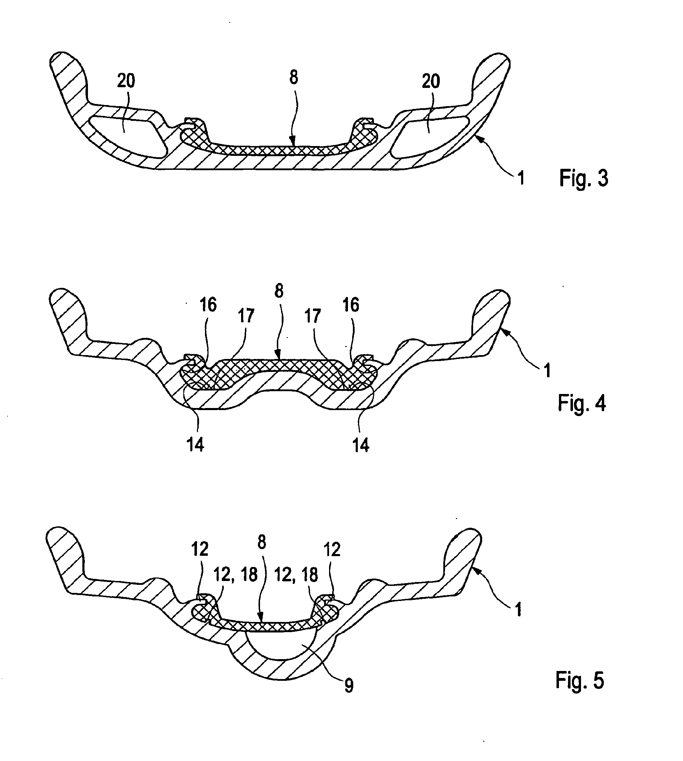

In den Fig. 3 bis 5 sind verschiedene weitere Ausführungsformen der Felge 1 abgebildet. In der zweiten Ausführungsform gemäß Fig. 3 weist die Felge jeweils zwei Hohlräume 20 auf, so dass die Masse der Felge 1 reduziert und dadurch das Rotationsträgheitsmoment verringert werden kann. In der dritten Ausführungsform der Felge 1 gemäß Fig. 4 ist im Bereich der Hinterschneidung 16 auch eine Vertiefung 17 jeweils entsprechend beiderseits zu der Mittelachse 5 ausgebildet. Dadurch kann die Verbindung zwischen der Felge 1 und der Dichtungsvorrichtung 8 weiter verbessert und somit die Stabilität der Dichtungsvorrichtung 8 in der Felge 1 zusätzlich erhöht werden. In der vierten Ausführungsform der Felge 1 gemäß Fig. 5 sind beiderseits der Mittelachse 5 jeweils zwei Rippen 12 ausgebildet. Die vierte Ausführungsform weist damit gegenüber der ersten Ausführungsform gemäß Fig. 1 und 2 an jeder Seite beiderseits der Mittelachse 5 jeweils eine zusätzliche Zusatzrippe 18 auf. Dadurch kann die Verbindung zwischen der Felge 1 und der Dichtungsvorrichtung 8 weiter verbessert werden. Diese verschiedenen Ausführungsformen zeigen die Flexibilität der Felge 1, so dass mit der Felge 1 auch verschiedene Designlösungen realisiert werden können.

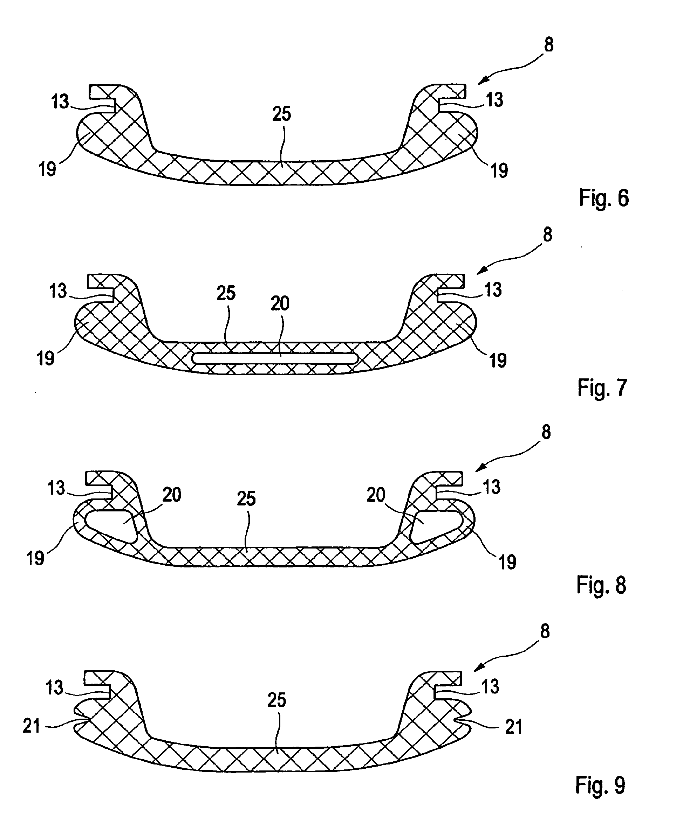

In den Fig. 6 bis 9 sind vier verschiedene Ausführungsformen der Dichtungsvorrichtung 8 abgebildet. Die erste Ausführungsform gemäß Fig. 6 entspricht der Dichtungsvorrichtung 8 in den Fig. 1 und 2. Die Dichtungsvorrichtung 1 weist dabei an jeder Seite jeweils eine Dichtungsnut 13 zum Einführen in die Rippe 12 und einen Dichtungssteg 19 zur Einführung in die Hinterschneidung 16 auf. Die beiden Dichtungsstege 19 sind dabei mittels einer Verbindungswandung 25 miteinander verbunden. In der zweiten und dritten Ausführungsform der Dichtungsvorrichtung 8 weist diese einen Hohlraum 20 auf. In der zweiten Ausführungsform gemäß Fig. 7 ist der Hohlraum 20 in der Verbindungswandung 25 angeordnet und in der dritten Ausführungsform gemäß Fig. 8 im Bereich der Dichtungsstege 19 vorhanden. Aufgrund der Hohlräume 20 in der zweiten und dritten Ausführungsform kann die Masse der Dichtungsvorrichtung 8 verringert werden, so dass ein geringeres Rotationsträgheitsmoment auftritt. In der vierten Ausführungsform der Dichtungsvorrichtung 8 weist diese jeweils an den beiden Dichtungsstegen 19 eine Aussparung 21 auf. Die Aussparung 21 hat die Aufgabe, den Festsitz bzw. die Flächenpresskraft des Dichtungssteges 19 in der Hinterschneidung 16 zu definieren.

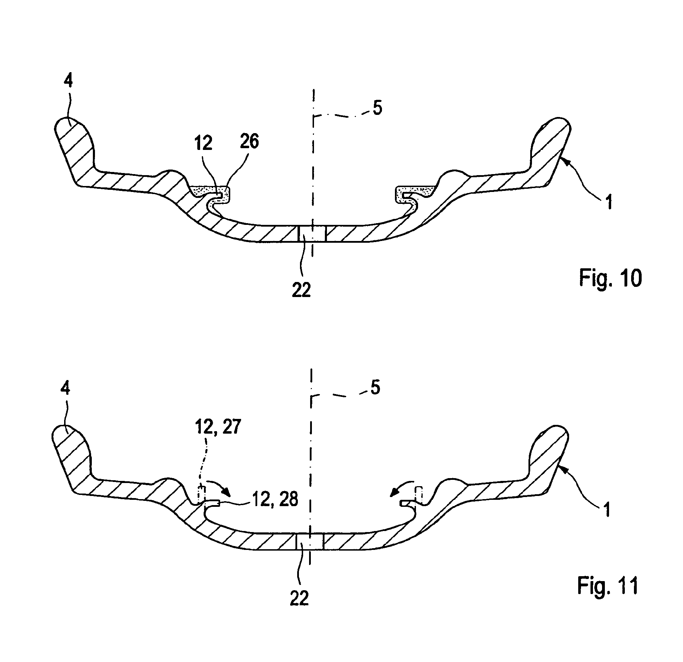

Zur Herstellung der Felge 1 sind mehrere Verfahrensschritte erforderlich. Zunächst wird mittels Strangpressen ein Profil mit dem Querschnitt gemäß Fig. 10 oder 11 hergestellt. Dieses Profil ist zunächst gerade und wird anschließend verformt, d. h. gebogen, so dass sich ein Felgenring ergibt. Die Enden dieses Profils werden dann miteinander verschweißt, so dass der Felgenring aus dem Profil mit dem Querschnitt gemäß Fig. 10 oder 11 geschlossen ist. Anschließend ist die Dichtungsvorrichtung 8 in der Felge 1 zu befestigen. Hierzu ist, wie bereits beschrieben, die Dichtungsnut 13 der Dichtungsvorrichtung 8 in die Rippe 12 und der Dichtungssteg 19 in die Hinterschneidung 16 einzuführen. Bei der Herstellung der Felge 1 beim Strangpressen ergeben sich Fertigungstoleranzen, so dass die Rippen 12 unterschiedliche Größen aufweisen können. Die Rippen 12 werden dabei zunächst beim Strangpressen mit einem Überschussmaterial 26 ausgebildet. Das Überschussmaterial 26 wird anschließend spanabhebend, z. B. mittels Einspannen des Felgenringes in eine Drehmaschine, bearbeitet, so dass sich die Rippe 12 insbesondere bezüglich der Größe mit einer sehr hohen Fertigungsgenauigkeit herstellen läßt. Anschließend kann aufgrund der hohen Fertigungsgenauigkeit der Rippe 12 die Dichtungsnut einfach bei der Montage in die Rippe 12 eingeführt werden. Ferner ergibt sich bei der spanabhebenden Bearbeitung der Rippe 12 auch eine sehr feine und plane Oberfläche der Rippe 12 (Fig. 10).

In einer zweiten Möglichkeit zur Herstellung der Felge 1 mit Dichtungsvorrichtung 8 wird die Rippe 12 nicht spanabhebend bearbeitet (Fig. 11). Die Rippe 12 weist nach dem Strangpressen und auch nach dem Biegen des stranggepressten Profils zu dem Felgenring zunächst die in Fig. 11 strichliert abgebildete Position 27 auf. In dieser strichliert dargestellten Position ist der Winkel α, d. h. die Ausrichtung der Rippe 12 zu der Mittelachse 5, 0°. Nach der Herstellung des Felgenringes, d. h. des Biegens des Strangpressprofils und des Verschweißens der Enden des Strangpressprofils, wird die Rippe 12 in die Position 28 verformt. In der Position 28 wird somit die Rippe 12 in Richtung zu der Mittelachse 5 verschwenkt, so dass der Winkel α ungefähr im Bereich von 50 bis 70° liegt. Bei dieser Verformung der Rippe 12 ist in der Felge 1 bereits die Dichtungsvorrichtung 8 angeordnet. Während der Verformung bzw. dem Umbiegen der Rippe 12 wird somit gleichzeitig die Rippe 12 in die Dichtungsnut 13 der Dichtungsvorrichtung 8 eingeführt (nicht dargestellt). Das Verformen der Rippe 12 kann beispielsweise mit einem Rollvorgang ausgeführt werden. Hierzu wird eine Rolle auf einer entsprechenden Seite der Rippe 12 aufgelegt und abgerollt, so dass auf die Rippe 12 eine entsprechende Kraft zur Verformung aufgebracht wird. Die Felge 1 ist dabei bereits als Felgenring ausgebildet. Aufgrund der hierbei auftretenden großen Kräfte während der Verformung können auch Fertigungsungenauigkeiten an der Rippe 12, weil keine spanabhebende Bearbeitung erfolgt, ausgeglichen werden. Wegen der großen Kräfte beim Einbringen der Rippe 12 in die Dichtungsnut 13 kann die Rippe 12 sicher in die Dichtungsnut 13 auch bei großen Fertigungsungenauigkeiten, d. h. großen Differenzen zwischen der Größe der Rippe 12 und der Dichtungsnut 13, eingebracht werden.

Insgesamt betrachtet sind mit der erfindungsgemäßen Felge 1 und dem erfindungsgemäßen Speichenrad wesentliche Vorteile verbunden. Das Speichenrad kann schlauchlos mit einem Schlauchlosreifen 10 ausgestattet werden, so dass die Nachteile bei der Verwendung eines Luftschlauches nicht vorliegen. Die Abdichtung des von dem Schlauchlosreifen 10 und der Felge 1 eingeschlossenen Raumes erfolgt sicher und zuverlässig mit der Dichtungsvorrichtung 8. Die Verbindung zwischen der Dichtungsvorrichtung 8 und der Felge 1 ist auch bei speziellen Anwendungen, z. B. im Offroad-Betrieb mit einem niedrigen Luftdruck und hohen Rotationsgeschwindigkeiten des Speichenrades, gewährleistet. Ferner bestehen im Wesentlichen keine Einschränkungen für das Design der Felge 1.

### Bezugszeichenliste

- 1: Felge
- 2: Felgenbett
- 3: Speichennippel
- 4: Felgenhorn
- 5: Mittelachse
- 6: Erste Reifenwulst
- 7: Zweite Reifenwulst
- 8: Dichtungsvorrichtung
- 9: Kammer, ringförmig
- 10: Schlauchlosreifen
- 11: Hump
- 12: Rippe
- 13: Dichtungsnut
- 14: Erste Auflagefläche
- 15: Zweite Auflagefläche
- 16: Hinterschneidung
- 17: Vertiefung
- 18: Zusatzrippe
- 19: Dichtungssteg
- 20: Hohlraum
- 21: Aussparung
- 22: Punze
- 23: Speiche
- 24: Achse
- 25: Verbindungswandung
- 26: Überschussmaterial an Rippe
- 27: Position der Rippe vor der Verformung
- 28: Position der Rippe nach der Verformung
- 29: Gerade

## Patentansprüche

1. Felge (1) mit einer Dichtungsvorrichtung (8) für ein Speichenrad mit Schlauchlosreifen (10), wobei die Felge (1) wenigstens eine Rippe (12) aufweist, welche in wenigstens eine Dichtungsnut (13) in der Dichtungsvorrichtung (8) eingreift, so dass sich an der wenigstens einen Rippe (12) eine erste Auflagefläche (14) für die Dichtungsvorrichtung (8) ausbildet, wobei die Dichtungsvorrichtung (8) zusätzlich an wenigstens einer zweiten Auflagefläche (15) der Felge (1) aufliegt,
**dadurch gekennzeichnet,**
**dass** die wenigstens eine Rippe (12) durch Umformung in die Position gebracht ist, in der sie in die wenigstens eine Dichtungsnut (13) eingreift.

2. Felge nach Anspruch 1, **dadurch gekennzeichnet, dass** die wenigstens eine zweite Auflagefläche (15) und/oder die wenigstens eine Rippe (12) und/oder die wenigstens eine Dichtungsnut (13) beiderseits einer Mittelachse (5) oder einer Felgenmittelebene ausgebildet ist.

3. Felge nach Anspruch 1 oder 2, **dadurch gekennzeichnet, dass** wenigstens 10 % der Oberfläche der wenigstens einen zweiten Auflagefläche (15) zu einer Achse (24) eines von der Felge (1) gebildeten Speichenrades abgewandt ist und/oder die Oberfläche der wenigstens einen zweiten Auflagefläche (15) wenigstens teilweise konkav ist.

4. Felge nach einem oder mehreren der vorhergehenden Ansprüche, **dadurch gekennzeichnet, dass** die Felge (1) im Bereich der zweiten Auflagefläche (15) wenigstens eine Hinterschneidung (16) aufweist und die Dichtungsvorrichtung (8) in der wenigstens einen Hinterschneidung (16) angeordnet ist.

5. Felge nach Anspruch 4, **dadurch gekennzeichnet, dass** die Dichtungsvorrichtung (8) im Wesentlichen form- und/oder flächenkomplementär zu der wenigstens einen Hinterschneidung (16) ausgebildet ist.

6. Felge nach einem oder mehreren der vorhergehenden Ansprüche, **dadurch gekennzeichnet, dass** die wenigstens eine Rippe (12) in einem Winkel (α) zwischen 0 und 180°, insbesondere zwischen 0° und 45°, zu der Mittelachse (5) oder Felgenmittelebene ausgerichtet ist.

7. Felge nach einem oder mehreren der vorhergehenden Ansprüche, **dadurch gekennzeichnet, dass** die Dichtungsvorrichtung (8), insbesondere die wenigstens eine Dichtungsnut (13), die wenigsten eine Rippe (12) wenigstens teilweise, insbesondere vollständig, umschließt.

8. Felge nach einem oder mehreren der vorhergehenden Ansprüchen 4 bis 7, **dadurch gekennzeichnet, dass** die wenigstens eine Hinterschneidung (16) zu einer Achse (24) eines von der Felge (1) gebildeten Speichenrades einen geringeren Abstand aufweist als die Rippe (12).

9. Felge nach einem oder mehreren der vorhergehenden Ansprüche, **dadurch gekennzeichnet, dass** die wenigstens eine Dichtungsvorrichtung (8) wenigstens teilweise aus einem elastischen Material, z. B. Kunststoff oder Gummi, besteht und/oder die erste und/oder zweite Auflagefläche (14, 15) im Bereich eines Felgenbettes (2) der Felge (1) angeordnet ist.

10. Speichenrad, umfassend eine Felge (1), eine Nabe, Speichen (23), einen Schlauchlosreifen (10) und eine Dichtungsvorrichtung (8) zum Abdichten von Punzen (22) in der Felge (1), **dadurch gekennzeichnet, dass** die Felge (1) gemäß einem oder mehreren der vorhergehenden Ansprüche ausgebildet ist.

11. Kraftfahrzeug oder Zweirad, insbesondere Kraftrad, **dadurch gekennzeichnet, dass** das Kraftfahrzeug oder das Zweirad wenigstens einen Felge (1) gemäß einem oder mehrerer der Ansprüche 1 bis 9 und/oder wenigstens ein Speichenrad gemäß Anspruch 10 umfasst.

12. Verfahren zur Herstellung einer Felge (1) oder eines Speichenrades, insbesondere einer Felge (1) gemäß einem oder mehrerer der Ansprüche 1 bis 9 oder eines Speichenrades gemäß Anspruch 10, mit den Schritten:
- Herstellen oder zur Verfügung stellen einer Felge (1) mit wenigstens einer Rippe (12),
- Herstellen oder zur Verfügung stellen einer Dichtungsvorrichtung (8) mit wenigstens einer Dichtungsnut (13),
- Einbringen der wenigstens einen Dichtungsnut (13) in die wenigstens eine Rippe (12) zum Verbinden der Dichtungsvorrichtung (8) mit der Felge (1), so dass sich eine erste Auflagefläche (14) zwischen der wenigstens einen Rippe (12) und der Dichtungsnut (13) ausbildet,
**dadurch gekennzeichnet, dass**
die wenigstens eine Rippe (12) während des Einbringens in die wenigstens eine Dichtungsnut (13) verformt wird, derart, dass mittels der Verformung der wenigstens einen Rippe (12) die wenigstens eine Rippe (12) in die wenigstens eine Dichtungsnut (13) eingebracht wird.

13. Verfahren nach Anspruch 12, **dadurch gekennzeichnet, dass** die wenigstens eine Rippe (12) vor dem Einbringen der wenigstens einen Dichtungsnut (13) in die wenigstens eine Rippe (12), vorzugsweise mittels Drehen und/oder Fräsen, spanabhebend bearbeitet wird.

14. Verfahren nach Anspruch 12 oder 13, **dadurch gekennzeichnet, dass** wenigstens eine Rippe (12) mittels bördeln und/oder umdrücken und/oder einem Rollvorgang verformt wird und/oder bei der Verformung der wenigstens einen Rippe (12) die Ausrichtung der wenigstens einen Rippe (12) in einem Winkel (α) zu einer Mittelachse (5) geändert wird, z. B. der Winkel (α) zwischen 0° und 120 geändert wird.

15. Verfahren nach einem oder mehrerer der Ansprüche 12 bis 14, **dadurch gekennzeichnet, dass** die Dichtungsvorrichtung (8) auf wenigstens eine zweite Auflagefläche (15) der Felge (1) aufgelegt wird.

## Claims

1. A rim (1) with a sealing device (8) for a spoked wheel with tubeless tyre (10), wherein the rim (1) has at least one rib (12) which engages into at least one sealing groove (13) in the sealing device (8), so that a first bearing surface (14) for the sealing device (8) is formed on the at least one rib (12), wherein the sealing device (8) rests additionally on at least a second bearing surface (15) of the rim (1), **characterized in that**
the at least one rib (12) is brought by deformation into the position in which it engages into the at least one sealing groove (13).

2. The rim according to Claim 1, **characterized in that** the at least one second bearing surface (15) and/or the at least one rib (12) and/or the at least one sealing groove (13) is formed on both sides of a central axis (5) or of a centre plane of the rim.

3. The rim according to Claim 1 or 2, **characterized in that** at least 10% of the surface of the at least one second bearing surface (15) faces away with respect to an axis (24) of a spoked wheel formed by the rim (1) and/or the surface of the at least one second bearing surface (15) is at least partially concave.

4. The rim according to one or more of the preceding claims, **characterized in that** the rim (1) has at least one undercut (16) in the region of the second bearing surface (15), and the sealing device (8) is arranged in the at least one undercut (16).

5. The rim according to Claim 4, **characterized in that** the sealing device (8) is constructed substantially in a complementary manner to the at least one undercut (16) with regard to shape and/or surface.

6. The rim according to one or more of the preceding claims, **characterized in that** the at least one rib (12) is aligned at an angle (α) between 0 and 180°, in particular between 0° and 45° to the central axis (5) or centre plane of the rim.

7. The rim according to one of more of the preceding claims, **characterized in that** the sealing device (8), in particular the at least one sealing groove (13), surrounds the at least one rib (12) at least partially, in particular completely.

8. The rim according to one or more of the preceding Claims 4 to 7, **characterized in that** the at least one undercut (16) has a smaller distance than the rib (12) to an axis (24) of a spoked wheel formed by the rim (1).

9. The rim according to one or more of the preceding claims, **characterized in that** the at least one sealing device (8) consists at least partially of an elastic material, e.g. plastic or rubber, and/or the first and/or second bearing surface (14, 15) is arranged in the region of a rim well (2) of the rim (1).

10. A spoked wheel, comprising a rim (1), a hub, spokes (23), a tubeless tyre (10) and a sealing device (8) for the sealing of punches (22) in the rim (1), **characterized in that** the rim (1) is constructed according to one or more of the preceding claims.

11. A motor vehicle or two-wheeler, in particular a motorcycle, **characterized in that** the motor vehicle or the two-wheeler comprises at least one rim (1) according to one or more of Claims 1 to 9, and/or at least one spooked wheel according to Claim 10.

12. A method for the production of a rim (1) or of a spoked wheel, in particular of a rim (1) according to one or more of Claims 1 to 9 or of a spoked wheel according to Claim 10, with the steps:
- manufacturing or providing a rim (1) with at least one rib (12),
- manufacturing or providing a sealing device (8) with at least one sealing groove (13),
- introducing the at least one sealing groove (13) into the at least one rib (12) for connecting the sealing device (8) with the rim (1), so that a first bearing surface (14) is formed between the at least one rib (12) and the sealing groove (13),
**characterized in that**
the at least one rib (12) is deformed during the introduction into the at least one sealing groove (13), such that by means of the deformation of the at least one rib (12) the at least one rib (12) is introduced into the at least one sealing groove (13).

13. The method according to Claim 12, **characterized in that** the at least one rib (12), before the introduction of the at least one sealing groove (13) into the at least one rib (12), is processed by machining, preferably by means of turning and/or milling.

14. The method according to Claim 12 or 13, **characterized in that** at least one rib (12) is deformed by means of flanging and/or pressing around and/or a rolling process, and/or during the deformation of the at least one rib (12) the alignment of the at least one rib (12) at an angle (α) to a central axis (5) is altered, e.g. the angle (α) is altered between 0° and 120.

15. The method according to one or more of Claims 12 to 14, **characterized in that** the sealing device (8) is applied onto at least a second bearing surface (15) of the rim (1).

## Revendications

1. Jante (1) comportant un dispositif d'étanchéité (8) pour une roue à rayons avec un pneu sans chambre à air (10), dans laquelle la jante (1) présente au moins une nervure (12), qui s'engage dans au moins une rainure d'étanchéité (13) dans le dispositif d'étanchéité (8), de sorte que sur au moins une nervure (12), une première surface de positionnement (14) destinée au dispositif d'étanchéité (8) soit formée, dans laquelle le dispositif d'étanchéité (8) vienne reposer en outre sur au moins une deuxième surface de positionnement (15) de la jante (1),
**caractérisée en ce que**
au moins une nervure (12) est amenée par déformation dans la position, dans laquelle elle s'engage dans au moins une rainure d'étanchéité (13).

2. Jante selon la revendication 1, **caractérisée en ce qu'**au moins une deuxième surface de positionnement (15) et/ou au moins une nervure (12) et/ou au moins une rainure d'étanchéité (13) est réalisée des deux côtés d'un axe central (5) ou d'un plan central de la jante.

3. Jante selon les revendications 1 ou 2, **caractérisée en ce que** au moins 10% de la surface d'au moins une deuxième surface de positionnement (15) se détourne d'un axe (24) d'une roue à rayons formée par la jante (1) et/ou la surface d'au moins une deuxième surface de positionnement (15) est au moins partiellement concave.

4. Jante selon une ou plusieurs des revendications précédentes, **caractérisée en ce que** la jante (1) présente au niveau de la deuxième surface de positionnement (15) au moins une contre-dépouille (16) et le dispositif d'étanchéité (8) est disposé dans au moins une contre-dépouille (16).

5. Jante selon la revendication 4, **caractérisée en ce que** le dispositif d'étanchéité (8) est conçu essentiellement avec une forme et/ou surface complémentaire à au moins une contre-dépouille (16).

6. Jante selon une ou plusieurs des revendications précédentes, **caractérisée en ce que** au moins une nervure (12) est alignée à un angle (α) compris entre 0 et 180°, notamment entre 0° et 45°, par rapport à l'axe central (5) ou au plan central de la jante.

7. Jante selon une ou plusieurs des revendications précédentes, **caractérisée en ce que** le dispositif d'étanchéité (8), notamment au moins une rainure d'étanchéité (13), enveloppe au moins partiellement, notamment en totalité, au moins une nervure (12).

8. Jante selon une ou plusieurs des revendications précédentes 4 à 7, **caractérisée en ce que** au moins une contre-dépouille (16) présente un espacement moindre par rapport à un axe (24) d'une roue à rayons formée par la jante (1) que la nervure (12).

9. Jante selon une ou plusieurs des revendications précédentes, **caractérisée en ce que** au moins un dispositif d'étanchéité (8) est constituée au moins partiellement d'un matériau élastique, par ex. du plastique ou du caoutchouc, et/ou la première et/ou la deuxième surface de positionnement (14, 15) est disposée au niveau d'une base de la jante (2) de la jante (1).

10. Roue à rayons, comprenant une jante (1), un moyeu, des rayons (23), un pneu sans chambre à air (10) et un dispositif d'étanchéité (8) pour étanchéifier des poinçons (22) dans la jante (1), **caractérisé en ce que** la jante (1) est réalisée conformément à une ou plusieurs des revendications précédentes.

11. Véhicule automobile ou deux-roues, notamment vélomoteur, **caractérisé en ce que** le véhicule automobile ou le deux-roues comprend au moins une jante (1) selon une ou plusieurs des revendications 1 à 9 et/ou au moins une roue à rayons selon la revendication 10.

12. Procédé de fabrication d'une jante (1) ou d'une roue à rayons, notamment d'une jante (1) selon une ou plusieurs des revendications 1 à 9 ou d'une roue à rayons selon la revendication 10, comportant les étapes consistant à :
- fabriquer ou fournir une jante (1) comportant au moins une nervure (12),
- fabriquer ou fournir un dispositif d'étanchéité (8) comportant au moins une rainure d'étanchéité (13),
- mettre en place au moins une rainure d'étanchéité (13) dans au moins une nervure (12) afin de relier le dispositif d'étanchéité (8) avec la jante (1), de sorte qu'une première surface de positionnement (14) soit formée entre au moins une nervure (12) et la rainure d'étanchéité (13), **caractérisé en ce que**
au moins une nervure (12) est déformée pendant la mise en place dans au moins une rainure d'étanchéité (13), de telle sorte qu'au moyen de la déformation d'au moins une nervure (12), au moins une nervure (12) soit mise en place dans au moins une rainure d'étanchéité (13).

13. Procédé selon la revendication 12, **caractérisé en ce qu'**au moins une nervure (12) est usinée par enlèvement de matière avant la mise en place d'au moins une rainure d'étanchéité (13) dans au moins une nervure (12), de préférence par tournage et/ou fraisage.

14. Procédé selon les revendications 12 ou 13, **caractérisé en ce que** au moins une nervure (12) est déformée par sertissage et/ou pressage vers l'extérieur et/ou un processus de roulage et/ou lors de la déformation d'au moins une nervure (12), l'alignement d'au moins une nervure (12) est modifié d'un angle (α) par rapport à l'axe central (5), par ex. l'angle (α) est modifié entre 0° et 120°.

15. Procédé selon une ou plusieurs des revendications 12 à 14, **caractérisé en ce que** le dispositif d'étanchéité (8) est apposé sur au moins une deuxième surface de positionnement (15) de la jante (1).
